# EUROPÄISCHE PATENTSCHRIFT

(11) **EP 0 926 426 B1**
(45) Veröffentlichungstag und Bekanntmachung des Hinweises auf die Patenterteilung: **02.04.2003**
(21) Anmeldenummer: 98119208.1
(22) Anmeldetag: 12.10.1998
(51) Int. Cl.: F16N 29/02, F16N 7/38

(54) **Verfahren zur Schmierung einer Vorrichtung mit mehreren Schmierstellen und Zentralschmieranlage zur Durchführung des Verfahrens**
Method of lubrication of a device with a plurality of lubrication points and central lubrication system for carrying out said method
Procédé de lubrification d'un dispositif ayant plusieurs points à lubrifier et dispositif pour la mise en oeuvre de cette méthode

(30) Priorität: 23.12.1997 DE 19757546
(43) Veröffentlichungstag der Anmeldung: 30.06.1999
(73) Patentinhaber: perma-tec GmbH & Co. KG, 97717 Euerdorf (DE)
(72) Erfinder: Graf, Walter, 97717 Euerdorf (DE); May, Anton, 97705 Burkardroth (DE)
(74) Vertreter: Albrecht, Rainer Harald, Dr.-Ing.

(56) Entgegenhaltungen:
- EP-A- 0 374 958
- EP-A- 0 489 603
- EP-A- 0 498 242
- EP-A- 0 704 654
- EP-A- 0 854 314
- DE-U- 29 715 808
- US-A- 4 368 803
- US-A- 5 271 528

## Beschreibung

Die Erfindung betrifft ein Verfahren zur Schmierung einer Vorrichtung mit mehreren Schmierstellen. Vorrichtung meint im Rahmen der Erfindung Maschinen sowie Anordnungen mit beweglichen Maschinenelementen, z. B. Förderanlagen, Kettenantriebe und dergleichen, ebenso wie Produktionsanlagen mit einer Mehrzahl von zu schmierenden Aggregaten. Aus terminologischen Gründen werden ohne Begrenzung des Schutzumfanges im folgenden die Begriffe Vorrichtung und Maschine verwendet.

Bei dem aus der Praxis bekannten Verfahren gemäß der EP-A-498 242 wird mit einem zentralen Schmierstoffvorrat gearbeitet, von dem aus der Schmierstoff über Rohrleitungen den verschiedenen Schmierstellen der Vorrichtung zugeführt wird. Das aus der Praxis bekannte Verfahren läßt zu wünschen übrig, weil die Schmierstoffzufuhr über eine Vielzahl von Rohrleitungen verhältnismäßig aufwendig ist und eine exakte Dosierung unterschiedlicher Schmiermittelmengen an den Schmierstellen nicht gelingt. Ferner ist die mögliche Länge der Rohrleitungen im Hinblick auf eine effektive Förderung des Schmierstoffes begrenzt. Schließlich kommt es in der Praxis vor, daß verschiedene Maschinenelemente einer Maschine bzw. Komponenten einer Anlage mit unterschiedlichen Schmierstoffen geschmiert werden müssen. Im Rahmen der bekannten Maßnahmen müssen dann mehrere Zentralschmieranlagen mit entsprechenden Einrichtungen zur Steuerung der Schmierstoffabgabe vorgesehen werden.

Demgegenüber liegt der Erfindung das technische Problem zugrunde, ein Verfahren zur Schmierung einer Vorrichtung mit mehreren Schmierstellen sowie eine Zentralschmieranlage zur Durchführung des Verfahrens anzugeben, mit dem auf einfache Weise eine funktionssichere und variable Schmierstoffzufuhr, insbes. auch bei weiter beabstandeten Schmierstellen verwirklicht werden kann.

Gegenstand der Erfindung und Lösung dieser Aufgabe ist ein Verfahren zur Schmierung einer Vorrichtung mit mehreren Schmierstellen, wobei
den Schmierstellen durch zugeordnete Schmierstoffgeber, die jeweils einen elektromotorischen Antrieb mit Steuereinrichtung, einen Schmierstoffbehälter mit Schmierstoffvorrat, eine mit dem Antrieb verbundene Spindel sowie einen von der Spindel bewegbaren Kolben aufweisen, Schmierstoff zugeführt wird,
die Schmierstoffabgabe jedes Schmierstoffgebers in einer zeitlichen Abfolge von Spendeintervallen erfolgt und die Spendezeitpunkte für die Schmierstoffabgabe sowie die Dauer der Spendeintervalle gesteuert werden und
die Steuereinrichtungen der Schmierstoffgeber von einem Zentralrechner in Abhängigkeit von Betriebszustandsdaten der geschmierten Vorrichtung angesteuert werden.

Die Steuereinrichtung der Schmierstoffgeber ist zweckmäßigerweise auf einer Platine im Schmierstoffgebergehäuse angeordnet und mit einem Microcontroller ausgerüstet.

Nach dem erfindungsgemäßen Verfahren werden mit dem Zentralrechner die Betriebszustandsdaten der geschmierten Vorrichtung, insbes. die Informationen "geschmierte Maschine eingeschaltet" oder "geschmierte Maschine ausgeschaltet", abgefragt. Es liegt auch im Rahmen der Erfindung, daß von dem Zentralrechner unterschiedliche Betriebsarten der geschmierten Vorrichtung und ähnliche Betriebszustandsdaten abgefragt werden können. Zweckmäßigerweise weist die geschmierte Vorrichtung Schalt- oder Sensorelemente zur Abfrage der Betriebszustandsdaten auf.

Gemäß einer bevorzugten Ausführung des erfindungsgemäßen Verfahrens werden Betriebszustandsdaten der Schmierstoffgeber von den Steuereinrichtungen erfaßt und dem Zentralrechner zugeführt. Folglich erfolgt ein Signalaustausch zwischen dem Zentralrechner und den Steuereinrichtungen der Schmierstoffgeber in beiden Richtungen. Es liegt im Rahmen der Erfindung, daß der Zentralrechner die Information "Schmierstoffgeber eingeschaltet" oder "Schmierstoffgeber ausgeschaltet" abfragt. Es liegt auch im Rahmen der Erfindung, daß dem Zentralrechner bei aufgebrauchtem Schmierstoffvorrat ein entsprechendes Signal über die Leerstandsanzeige des Schmierstoffgebers zugeführt wird. Ferner können dem Zentralrechner bei Betriebsstörungen eines Schmierstoffgebers entsprechende Signale zugeführt werden.

Nach bevorzugter Ausführung der Erfindung erfolgt die Übermittlung der Betriebszustandsdaten der geschmierten Vorrichtung und/oder die Übermittlung der Betriebszustandsdaten der Schmierstoffgeber und/oder die Übermittlung der Steuersignale von der Zentralwarte zu den Schmierstoffgebern drahtlos. Vorzugsweise wird die drahtlose Übermittlung mit elektromagnetischen Wellen, bevorzugt mit Funksignalen durchgeführt. Es liegt auch im Rahmen der Erfindung, daß die drahtlose Übermittlung mit optischen Signalen erfolgt. Nach einer anderen Ausführungsform der Erfindung werden die Betriebszustandsdaten der geschmierten Vorrichtung und/oder der Schmierstoffgeber und/oder die von der Zentralwarte ausgehenden Steuersignale mittels einer Festverdrahtung übermittelt.

Für die Funktionssteuerung der Schmierstoffgeber bieten sich verschiedene Möglichkeiten an. Gemäß einer ersten Ausführung, die sich durch einen geringen steuerungstechnischen Aufwand auszeichnet, werden die Schmierstoffgeber von einer externen Spannungsquelle mit Spannung versorgt und wird die Spannung von der Zentralwarte bzw. über den Zentralrechner eingeschaltet und ausgeschaltet. Mit der Einschaltung der Versorgungsspannung sind die Schmierstoffgeber betriebsbereit. Die Ausführungsform zeichnet sich durch den Vorteil aus, daß der Betrieb der Schmierstoffgeber nicht von der Kapazität von Batterien oder Akkumulatoren abhängt. Bei dieser ersten Ausführungsform mit externer Spannungsversorgung wird die Schmierstoffabgabe, insbes. die Schmierstoffspendezeitpunkte und die Schmierstoffspendedauer, von der im Schmierstoffgeber angeordneten Steuereinrichtung gesteuert. Die Spendezeitpunkte und die Dauer der Spendeintervalle sind fest vorgegeben.

Das Verfahren ist problemlos, wenn die zu schmierende Vorrichtung im Dauerbetrieb arbeitet. Ist ein durchgehender Schmierbetrieb über längere Zeiträume nicht möglich, besteht die Gefahr von Fehldosierungen, da die Abgabe der Schmierimpulse nicht ausreichend mit der tatsächlichen Betriebszeit der zu schmierenden Maschine synchronisiert ist. Das Problem kann dadurch beseitigt werden, daß die Spendezeit, in der die Schmierstoffgeber betriebsbereit sind, von den Steuereinrichtungen der Schmierstoffgeber fortlaufend erfaßt und permanent abgespeichert wird. Das aufsummierte Zeitsignal beinhaltet eine Information, welche Zeit seit dem letzten Schmierimpuls vergangen ist. Damit steht gleichzeitig auch die Restzeit bis zur Auslösung der nächsten Schmierstoffabgabe fest. Nach einer Betriebsunterbrechung greift die Steuereinrichtung auf die abgespeicherten Werte zurück und löst nach Ablauf der Restzeit den nächsten Schmierimpuls aus.

Vorzugsweise werden die Spindelumdrehungen des elektromotorischen Antriebs der Schmierstoffgeber mittelbar oder unmittelbar durch einen Bewegungssensor erfaßt und wird die Summe der Spindelumdrehungen ebenfalls in einem Datenspeicher permanent abgespeichert. Die aufsummierten Bewegungssignale des Bewegungssensors liefern eine Information über die Stellung des Kolbens bzw. den noch vorhandenen Schmiermittelvorrat. Wird eine vorgegebene Anzahl von Spindelumdrehungen erreicht, wird an den Zentralrechner ein Signal zur Leerstandanzeige abgegeben.

Nach einer zweiten Ausführunsform der Erfindung werden die Schmierstoffgeber von einer im Schmierstoffgebergehäuse angeordneten Spannungsquelle mit Spannung versorgt und wird die Spannungszufuhr durch ein in der Zentralwarte bzw. vom Zentralrechner erzeugtes Signal aktiviert oder deaktiviert. Der Zentralrechner gibt während der Einschaltdauer der Steuereinrichtungen potentialfrei ein Signal an die Steuereinrichtungen ab, welches als Startsignal für die Zeitmessung genutzt wird. Die Steuereinrichtungen befinden sich sozusagen im Stand-by-Betrieb. Sobald die zu schmierende Vorrichtung in Betrieb gesetzt wird, beginnt die Erfassung der Spendezeit. Die Schmierstoffabgabe, d. h. die Schmierstoffspendezeitpunkte und die Spendedauer, wird von den Steuereinrichtungen der Schmierstoffgeber gesteuert. Bei der beschriebenen Ausführung des erfindungsgemäßen Verfahrens kann mit einer drahtlosen Signalübermittlung von der Zentralwarte bzw. von dem Zentralrechner zu den Schmierstoffgebern gearbeitet werden.

Bei den beiden vorgenannten Ausführungsformen werden die Schmierstoffgeber zunächst von der Zentralwarte aus durch Einschaltung bzw. durch Aktivierung der Spannungszufuhr betriebsbereit geschaltet. Die weitere Steuerung der Schmierstoffabgabe übernimmt die Steuereinrichtung der Schmierstoffgeber. Diese gibt feste Pulslängen zur Aktivierung des elektromotorischen Antriebs und zur Festlegung einer bestimmten Schmierstoffspendedauer vor und bestimmt außerdem feste Pausenlängen für die Unterbrechungsdauer der Schmierstoffabgabe. Die Überwachung der Schmierstoffabgabe erfolgt bei beiden Ausführungen intern im Schmierstoffgeber. Vorzugsweise wird die Anzahl der Spindelumdrehungen mittelbar oder unmittelbar durch einen Bewegungssensor erfaßt. Der elektromotorische Antrieb der Schmierstoffgeber wird in den von der Steuereinrichtung vorgegebenen Intervallen in Betrieb gesetzt und nach einer vorgegebenen Anzahl der von dem Bewegungssensor detektierten Umdrehungen gestoppt.

Bei einer dritten Ausführungsform des erfindungsgemäßen Verfahrens erfolgt die Einschaltung bzw. Aktivierung der Spannungszufuhr ebenso wie die Steuerung der Schmierstoffabgabe von der Zentralwarte bzw. dem Zentralrechner aus. Der Zentralrechner gibt den Steuereinrichtungen der Schmierstoffgeber sowohl die Pulslänge als auch die Pausenlänge vor. Bei anstehendem Signal läuft der elektromotorische Antrieb. Bei fehlendem Signal ist der elektromotorische Antrieb abgeschaltet. Die Spendemenge ist also direkt proportional zur Signallänge.

Bei einer vierten Ausführungsform des erfindungsgemäßen Verfahrens wird ebenfalls mit einer von der Zentralwarte ausgelösten externen Impulssteuerung gearbeitet. Von der Zentralwarte wird den Steuereinrichtungen der Schmierstoffgeber aber lediglich ein Impuls für die Aktivierung der Schmierstoffabgabe zugeführt. Die Steuereinrichtungen übernehmen die weitere Steuerung der Schmierstoffabgabe, insbes. der Schmierstoffspendedauer. Insoweit wird bei dieser Ausführungsform bei jedem von der Zentralwarte ausgegebenen Impuls eine Schmierstoffmenge abgegeben, die von der Steuereinrichtung der Schmierstoffgeber fest vorgegeben wird. Auch bei dieser Ausführung der Erfindung empfiehlt es sich, die Anzahl der Spindelumdrehungen mittelbar oder unmittelbar durch einen Bewegungssensor zu erfassen. Der elektromotorische Antrieb der Schmierstoffgeber wird aufgrund des von dem Zentralrechner abgegebenen Steuerimpulses in Betrieb gesetzt. Nach einer vorgegebenen Anzahl der von dem Bewegungssensor detektierten Umdrehungen wird der Antrieb wieder gestoppt.

Bei externen Steuerungen der Spendezeitpunkte und der Schmierstoffmengen ist der Zentralrechner bzw. die Zentralwarte zweckmäßig über einen Standardbus an die Steuereinrichtungen der Schmierstoffgeber angeschlossen. Über den Bus können auf einfache Weise eine Mehrzahl von Signalen bzw. Informationen an die Schmierstoffgeber übermittelt werden. Die Steuereinrichtungen der Schmierstoffgeber setzen die Signale bzw. Informationen in Impulse für die Schmierstoffabgabe um.

Das erfindungsgemäße Verfahren erlaubt auf einfache Weise eine flexible und variable Schmierung von Vorrichtungen sowie Anlagen mit weit auseinanderliegenden Schmierstellen. Durch die drahtlose oder über eine Drahtverbindung verwirklichte Kommunikation zwischen dem Zentralrechner und der Mehrzahl von Schmierstellen bzw. Schmierstoffgebern ist mit geringem technischen Aufwand eine funktionssichere Schmiermittelversorgung an den Schmierstellen realisierbar. Mit dem erfindungsgemäßen Verfahren kann eine Vielzahl von Schmierstoffgebern über weite Entfernungen gesteuert werden. Bei der drahtlosen Übertragung von Funksignalen zwischen Zentralwarte und Schmierstoffgebern können beispielsweise Entfernungen von 30 bis 50 m überbrückt werden. Das erfindungsgemäße Verfahren zeichnet sich durch den besonderen Vorteil aus, daß mit der zentralen Steuerung an den verschiedenen Schmierstellen unterschiedliche Schmierstoffe in verschiedenen Schmierstoffraten und zu verschiedenen Zeiten zugeführt werden können. Bei der drahtlosen Kommunikation zwischen Zentralwarte und Schmierstoffgeber ist von besonderem Vorteil, daß an sich bereits für Funkzentralverriegelungsanlagen für Kraftfahrzeuge bekannte Elektronikelemente eingesetzt werden können. Auch insoweit läßt sich das erfindungsgemäße Verfahren einfach und mit geringem Kostenaufwand realisieren.

Gegenstand der Erfindung ist ferner eine Zentralschmieranlage zur Durchführung des Verfahrens. Erfindungsgemäß besteht die Zentralschmieranlage aus einer zentralen Steuereinheit mit einem Mikrocomputer und einer speicherprogrammierbaren Steuerung und aus Schmierstoffgebern, die jeweils einen elektromotorischen Antrieb mit zugeordneter Steuereinrichtung, einen Schmierstoffbehälter mit Schmierstoffvorrat, eine mit dem Antrieb verbundene Spindel sowie einen von der Spindel bewegbaren Kolben aufweisen, wobei die zentrale Steuereinheit Eingangssignalleitungen für Betriebszustandssignale der Vorrichtung aufweist und über Ausgabevorrichtungen für Ausgangssignale mit den Steuereinrichtungen der Schmierstoffgeber verbunden ist. Weitere Ausgestaltungen der erfindungsgemäßen Zentralschmieranlage sind Gegenstand der nachgeordneten Ansprüche 9 bis 22.

Im folgenden wird die Erfindung anhand einer lediglich ein Ausführungsbeispiel darstellenden Zeichnung ausführlicher erläutert. Es zeigen
- Fig. 1 und 2: das Schema des erfindungsgemäßen Verfahrens in verschiedenen Ausführungen,
- Fig. 3: einen Schmierstoffgeber zum Einsatz im Rahmen des erfindungsgemäßen Verfahrens,
- Fig. 4: das Blockschaltbild einer Zentralschmieranlage zur Durchführung des erfindungsgemäßen Verfahrens,
- Fig. 5: das Blockschaltbild einer Steuerungseinrichtung der Schmierstoffgeber.

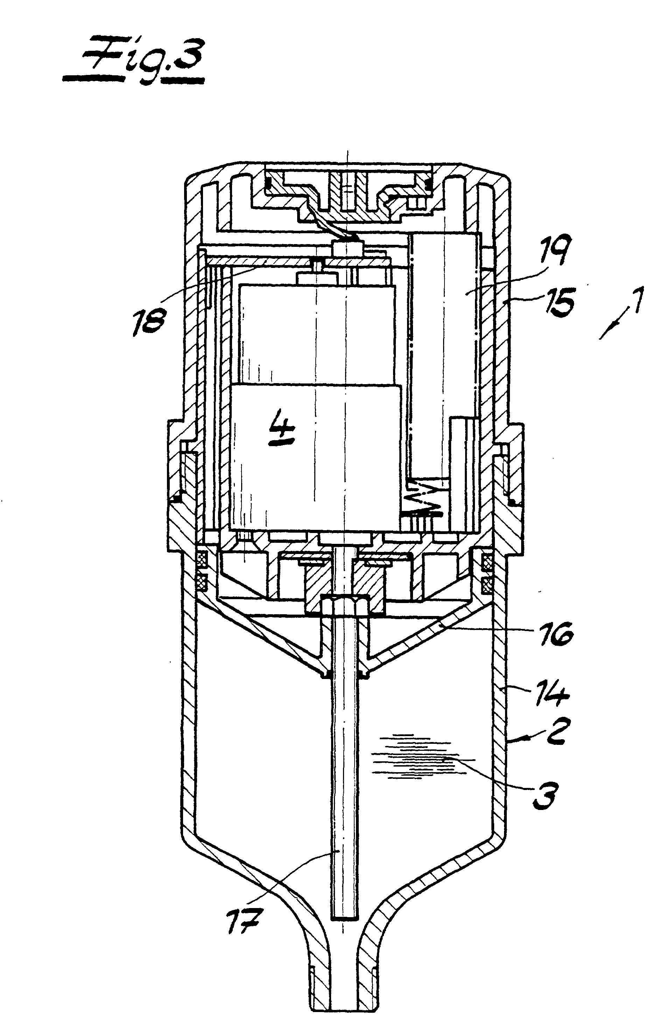

Das erfindungsgemäße Verfahren dient zur Schmierung von mehreren Schmierstellen einer Maschine oder Vorrichtung. Die Schmierstellen werden durch örtlich zugeordnete Schmierstoffgeber 1 geschmiert, wobei die Schmierstoffgeber 1 einen im Schmierstoffgebergehäuse 2 angeordneten Schmierstoffvorrat 3 sowie einen im Schmierstoffgebergehäuse angeordneten elektromotorischen Antrieb 4 aufweisen (Fig. 3).

Die Betriebszustandsdaten der zu schmierenden Maschine und die Betriebszustandsdaten der Schmierstoffgeber werden einem Zentralrechner 5 einer Zentralwarte 6 zugeführt. Nach Maßgabe der von dem Zentralrechner 5 erfaßten und ausgewerteten Betriebszustandsdaten werden die Schmierstoffgeber 1 von der Zentralwarte 6 aus gesteuert. Anstelle des Zentralrechners 5 oder zusätzlich zum Zentralrechner kann auch ein Laptop 7 zur Erfassung und Auswertung der Betriebszustandsdaten sowie zur Steuerung der Schmierstoffgeber eingesetzt werden. Es liegt auch im Rahmen der Erfindung, hierzu eine systemprogrammierte Steuerung (SPS) 8 einzusetzen.

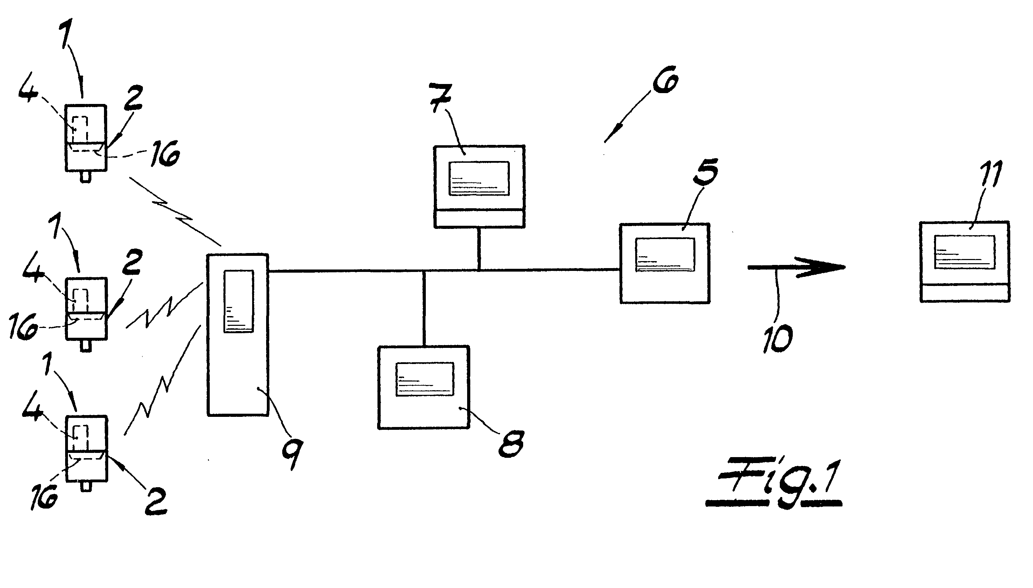

Im Ausführungsbeispiel nach Fig. 1 erfolgt die Kommunikation zwischen der Zentralwarte 6 und den Schmierstoffgebern 1 und/oder der Maschine drahtlos über Funksignale. Hierzu weist die Zentralwarte 6 eine Sendeund Empfangseinrichtung 9 auf. Es versteht sich, daß auch die Schmierstoffgeber 1 und/oder die Maschine entsprechende Sende- und Empfangseinrichtungen aufweisen. Im Ausführungsbeispiel nach Fig. 1 ist mit Hilfe eines Pfeils 10 angedeutet worden, daß die Zentralwarte bzw. Zentralrechner an einen Leitrechner 11 einer Leitzentrale, zweckmäßigerweise über das Internet, angeschlossen ist. Die Leitzentrale mit dem Leitrechner 11 dient vorzugsweise als Servicezentrale, von der aus kundenspezifisch Einsätze geplant und durchgeführt werden können.

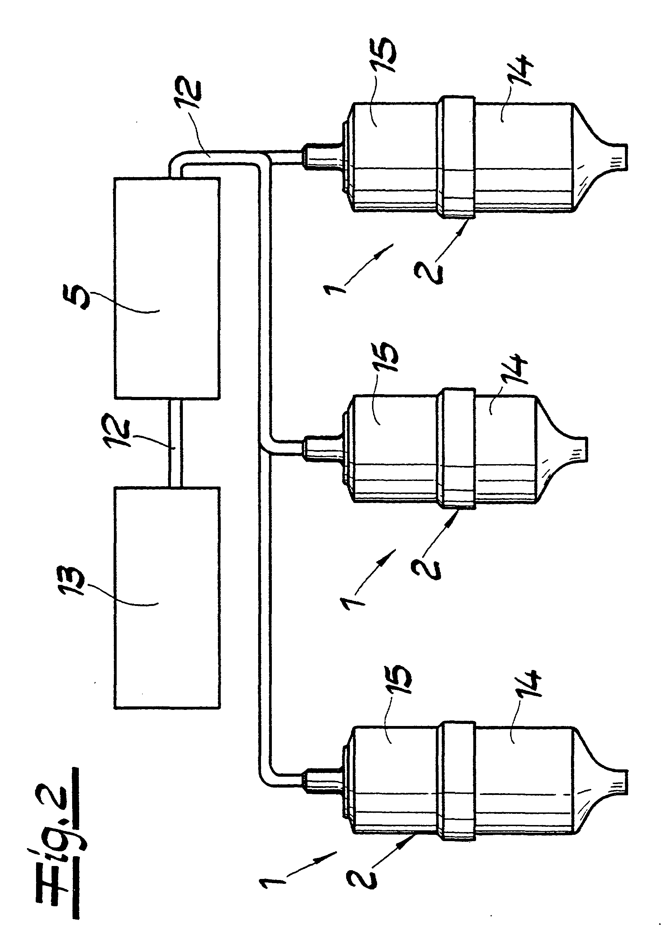

Bei der in Fig. 2 dargestellten Ausführung des erfindungsgemäßen Verfahrens ist der Zentralrechner 5 über ein Bussystem 12 mit der Maschinensteuerung der zu schmierenden Maschine 13 und mit Steuereinrichtungen der Schmierstoffgeber 1 verbunden. Die Schmierstoffgeber 1 werden auch von der Zentralwarte aus mit Energie extern versorgt. Sie können, was in Fig. 2 ebenfalls angedeutet ist, Schmierstoffvorratsbehälter 14 unterschiedlicher Größe aufweisen und mit unterschiedlichen Schmierstoffen befüllt sein.

Fig. 3 zeigt einen im Rahmen des erfindungsgemäßen Verfahrens eingesetzten Schmierstoffgeber 1 mit Schmierstoffgebergehäuse 2, das aus einem Schmierstoffvorratsbehälter 14 als Gehäuseunterteil und einem Gehäuseoberteil 15 besteht. Dargestellt ist ferner der elektromotorische Antrieb 4 mit zugeordneter Abtriebswelle. Ein Stellkolben 16 ist drehfest im Schmierstoffvorratsbehälter 14 angeordnet, von einer Spindel 17 durchfaßt sowie durch eine Drehbewegung der Spindel 17 in Ausstoßrichtung bewegbar. Im Gehäuseoberteil 15 oberhalb des elektromotorischen Antriebs 4 ist eine Steuereinrichtung 18 auf einer Platine bzw. Schaltplatine zur Steuerung des elektromotorischen Antriebs 4 angeordnet. Das Gehäuseoberteil 15 kann Batterien 19 zur Spannungsversorgung enthalten. Es liegt jedoch auch im Rahmen der Erfindung, daß die Spannungsversorgung des Schmierstoffgebers von außen erfolgt. Es versteht sich, daß der Schmierstoffgeber für einen Einsatz im Rahmen des erfindungsgemäßen Verfahrens mit in Fig. 3 nicht dargestellten Einrichtungen für die Kommunikation mit der Zentralwarte bzw. mit dem Zentralrechner ausgerüstet ist. Insoweit können nicht dargestellte elektrische Leitungen an den Schmierstoffgeber bzw. an die Schaltplatine angeschlossen sein. Der Schmierstoffgeber kann auch mit nicht dargestellten Empfangs- und Sendeeinrichtungen für die drahtlose Kommunikation ausgerüstet sein.

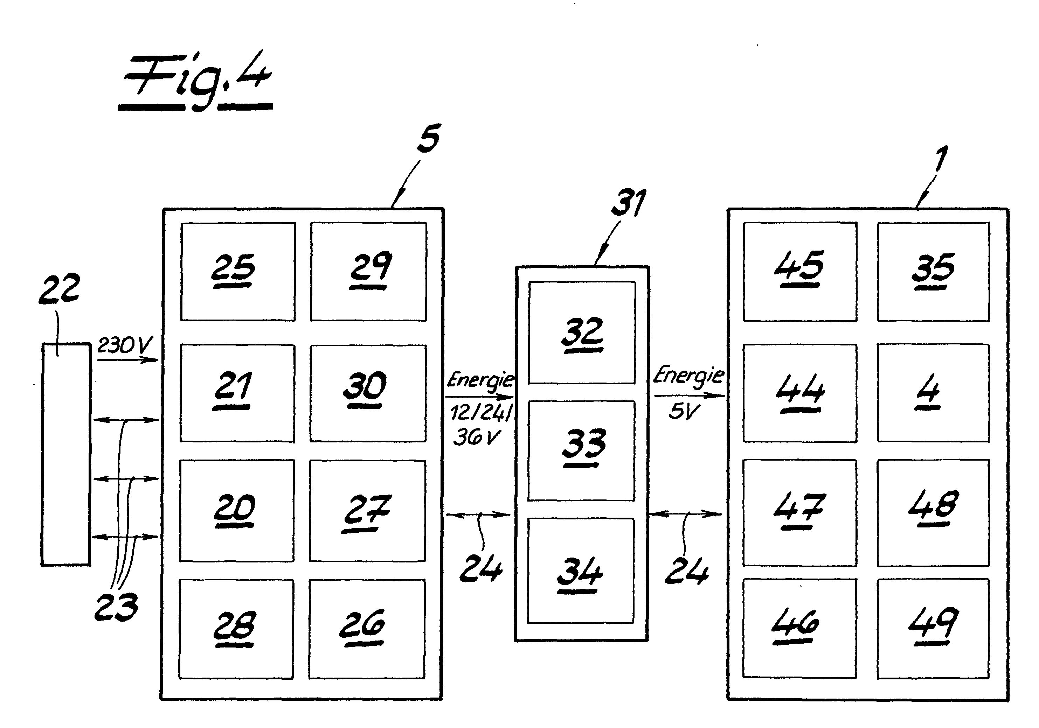

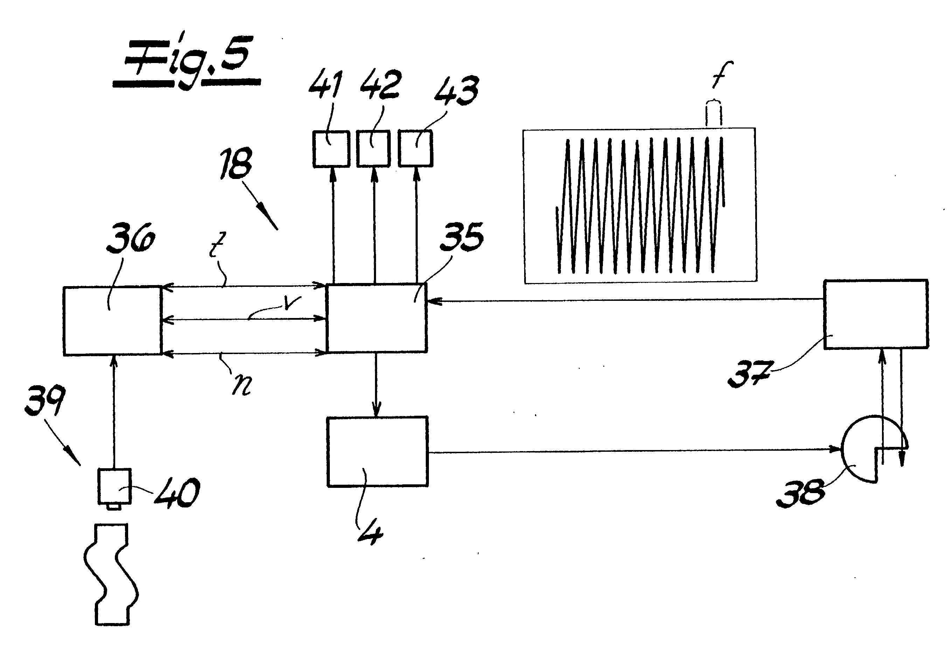

Aufbau und Funktionsweise einer zur Durchführung des erfindungsgemäßen Verfahrens eingerichteten Zentralschmieranlage soll im folgenden anhand der in den Figuren 4 und 5 dargestellten Blockschaltbilder näher erläutert werden. Kern der Zentralschmieranlage ist eine zentrale Steuereinheit 5, zuvor auch als Zentralrechner bezeichnet, mit einem Mikrocomputer 20 und einer speicherprogrammierbaren Steuerung 21. Die zentrale Steuereinheit 5 steht im Datenaustausch mit der Maschinensteuerung 22 der zu schmierenden Maschine. Die Datenkommunikation ist durch Eingangssignalleitungen 23 angedeutet. Die zentrale Steuereinheit 5 steht ferner im Datenaustausch mit den Steuereinrichtungen 18 der Schmierstoffgeber 1, z. B. über ein Bussystem 24. Dem Blockschaltbild in Fig. 4 entnimmt man, daß die zentrale Steuereinheit 5 ferner ein Netzteil 25 mit einer Aufbereitung der Versorgungsspannung für die Schmierstoffgeber 1, ein Eingangsmodul 26 mit Eingängen für Sensoren an der zu schmierenden Vorrichtung, eine Schnittstelle 27 für Download und Wartung, ein Bedienteil 28 mit Anzeige, ein Ausgangsmodul 29 mit Ausgängen für das zu den Steuereinrichtungen 18 der Schmierstoffgeber 1 führende Bussystem und (optional) eine Schnittstelle 30 für Fernwartung aufweist.

Die zentrale Steuereinrichtung 5 ist über Ausgabevorrichtungen 31 für Ausgangssignale mit den Steuereinrichtungen 18 der Schmierstoffgeber 1 verbunden. Die Ausgabevorrichtungen 31 umfassen gemäß dem in Fig. 4 dargestellten Blockschaltbild eine Spannungsaufbereitung 32 für die externe Energieversorgung der Schmierstoffgeber 1, einen Pegelwandler 33 sowie Einrichtungen 34 für eine Signalaufbereitung.

Aufbau und Funktionsweise der Steuereinrichtungen der Schmierstoffgeber wird aus dem Blockschaltbild der Fig. 5 verständlich. Die Steuereinrichtung 18 ist auf einer im Innern des Gehäuses, vorzugsweise oberhalb des elektromotorischen Antriebs angeordneten Platine untergebracht und weist als wesentliche Bestandteile einen Microcontroller 35, einen Datenspeicher 36 sowie einen Bewegungssensor 37 zur unmittelbaren oder mittelbaren Erfassung der Drehbewegung der Abtriebswelle auf.

In dem in Fig. 5 dargestellten Blockschaltbild ist der Bewegungssensor 37 als Lichtschranke dargestellt, die mit einer von dem elektromotorischen Antrieb 4 angetriebenen Signalscheibe 38 zusammenwirkt. Der Microcontroller 35 ist über Schnittstellen mit dem Bewegungssensor 37 und dem elektromechanischen Antrieb 4 verbunden und steht im Datenaustausch mit dem Datenspeicher 36. Der Datenspeicher 36 behält seinen Speicherinhalt unabhängig von der Stromversorgung des Microcontrollers 35. Der Speicherinhalt ist les- und überschreibbar. Dem Datenspeicher 36 ist ferner eine Schalteinrichtung 39 mit einem Reset-Schalter 40 zur Löschung des Datenspeichers zugeordnet.

Der Microcontroller 35 startet den elektromotorischen Antrieb 4 aufgrund eines von der zentralen Steuereinheit 5 abgegebenen Steuerimpulses oder in von der Steuereinrichtung vorgegebenen Intervallen. Die Anzahl der vom Bewegungssensor 37 abgegebenen Signale wird vom Microcontroller 35 gezählt und mit einer dort abgelegten Sollzahl verglichen. Nach Erreichen der vorgegebenen Zahl wird der Motor 4 gestoppt. Der Microcontroller 35 addiert die Meßsignale n des Bewegungssensors 37 fortlaufend zu einem im Datenspeicher 36 abgespeicherten Betriebswert und gibt die Summe als neuen Betriebswert in den Datenspeicher 36 ein. Im Zuge des Datenaustauschs ist ferner die verstrichene Spendezeit t im Datenspeicher 36 als Betriebswert abspeicherbar.

Der elektromotorische Antrieb 4 mit zugeordneter Steuereinrichtung 18 ist im Gehäuseoberteil 15 des Schmierstoffgebers 1 angeordnet, welches lösbar mit einem den Schmierstoffvorrat 3, den Kolben 16 und die Spindel 17 enthaltenden Schmierstoffbehälter 14 verbunden ist. Der Schmierstoffbehälter 14 mit Kolben 16 und Spindel 17 ist ein Wegwerfteil. Beim Anschluß eines fabrikneuen, noch den gesamten Schmierstoffvorrat 3 enthaltenden Schmierstoffbehälters 14 tritt der Reset-Schalter 40 mit dem Kolben 16 in Wechselwirkung und löst die Löschung des Datenspeichers 36 aus.

An Eingabeschnittstellen des Microcontrollers sind Wahlschalter für die Spendezeit t sowie für die Größe V des Schmierstoffbehälters 14 angeschlossen. Mittels des Wahlschalters für die Spendezeit t sind die Intervalle zwischen den Schmierimpulsen veränderbar. Die Information über die Größe V des Schmierstoffbehälters 14 kann ebenfalls im Datenspeicher 36 abgelegt werden.

An Ausgabeschnittstellen des Microcontrollers sind verschiedene Signaleinrichtungen 41, 42 angeschlossen. Dazu gehören eine Signaleinrichtung 41 zur Anzeige eines erforderlichen Wechsels des Schmierstoffbehälters, welche anspricht, wenn die Summe der vom Bewegungssensor 37 abgegebenen Signale n einen Vorgabewert erreicht. Ferner ist eine Signaleinrichtung 42 zur Anzeige eines Störsignals angeschlossen, die anspricht, wenn die Frequenz f der vom Bewegungssensor 37 abgegebenen Signalfolge während des Betriebs des elektromotorischen Antriebs 4 einen vorgegebenen Kontrollwert unterschreitet bzw. der zeitliche Abstand zwischen zwei Signalen einen Grenzwert überschreitet. Schließlich ist an einer Ausgabeschnittstelle des Microcontrollers 35 eine die Betriebsbereitschaft signalisierende Funktionsanzeige 43 angeschlossen, die den Motorbetrieb und die Pausenintervalle mit unterschiedlichen optischen Signalen anzeigt. Es erfolgt nicht nur eine lokale Anzeige des Betriebszustandes des Schmierstoffgebers, sondern die beschriebenen Signale 41, 42, 43 werden über die Datenkommunikationsleitung 24 an die zentrale Steuereinheit 5 weitergemeldet.

Die Steuereinrichtungen 18 der Schmierstoffgeber 1 sind modular aufgebaut. Grundmodule sind der elektromotorische Antrieb 4 mit einem zugeordneten Bewegungssensor für die mittelbare oder unmittelbare Erfassung der Spindelumdrehungen, eine Schaltplatine mit dem Microcontroller 35 sowie ein Schnittstellenbaustein 44 für die Datenkommunikation mit der zentralen Steuereinheit 5. Im Ausführungsbeispiel sind weitere Module vorgesehen für eine interne Spannungsversorgung 45, für die Einstellung der Spendezeit 46, für die Signalisierung des Betriebszustandes 47, ein Speicherbaustein 48 mit dem Datenspeicher und einer zugeordneten Schalteinrichtung mit Reset-Funktion für die Löschung des Datenspeichers sowie eine Einrichtung 49 für die Einstellung der Größe des Schmierstoffbehälters oder ggf. für eine automatische Größenerkennung.

## Patentansprüche

1. Verfahren zur Schmierung einer Vorrichtung mit mehreren Schmierstellen, wobei
den Schmierstellen durch zugeordnete Schmierstoffgeber, die jeweils einen elektromotorischen Antrieb mit Steuereinrichtung, einen Schmierstoffbehälter mit Schmierstoffvorrat, eine mit dem Antrieb verbundene Spindel sowie einen von der Spindel bewegbaren Kolben aufweisen, Schmierstoff zugeführt wird,
die Schmierstoffabgabe jedes Schmierstoffgebers in einer zeitlichen Abfolge von Spendeintervallen erfolgt und die Spendezeitpunkte für die Schmierstoffabgabe sowie die Dauer der Spendeintervalle gesteuert werden,
die Steuereinrichtungen der Schmierstoffgeber von einem Zentralrechner in Abhängigkeit von Betriebszustandsdaten der geschmierten Vorrichtung angesteuert werden und
die Versorgungsspannung der Steuereinrichtungen in Abhängigkeit des Betriebszustandes der zu schmierenden Vorrichtung ein- und ausgeschaltet wird, wobei die Spendezeit, in der die Schmierstoffspender betriebsbereit sind, von den Steuereinrichtungen der Schmierstoffgeber fortlaufend erfasst und permanent abgespeichert wird und wobei die Steuereinrichtungen eine Schmierstoffabgabe der Schmierstoffgeber auslösen, wenn die Spendezeit einen von der Steuereinrichtung vorgegebenen Spendezeitpunkt erreicht.

2. Verfahren nach Anspruch 1, wobei Betriebszustandsdaten der Schmierstoffgeber von den Steuereinrichtungen erfasst und dem Zentralrechner zugeführt werden.

3. Verfahren nach Anspruch 1 oder 2, wobei die Anzahl der Spindelumdrehungen mittelbar oder unmittelbar durch einen Bewegungssensor erfasst wird und wobei der elektromotorische Antrieb der Schmierstoffgeber aufgrund eines von dem Zentralrechner abgegebenen Steuerimpulses oder in von der Steuereinrichtung vorgegebenen Intervallen in Betrieb gesetzt sowie nach einer vorgegebenen Anzahl der von dem Bewegungssensor detektierten Umdrehungen gestoppt wird.

4. Verfahren nach Anspruch 3, wobei die Summe aller Spindelumdrehungen in einem Datenspeicher der Steuereinrichtung permanent abgespeichert wird und dem Zentralrechner ein Signal zur Leerstandsanzeige zugeführt wird, wenn eine vorgegebene Anzahl von Spindelumdrehungen erreicht wird.

5. Verfahren nach Anspruch 1 oder 2, wobei die Spendezeitpunkte für die Schmierstoffabgabe sowie die Dauer der Spenderintervalle von dem Zentralrechner gesteuert werden.

6. Verfahren nach einem der Ansprüche 1 bis 5, wobei mit einer drahtlosen Signalübertragung zwischen dem Zentralrechner und den Schmierstoffgebern gearbeitet wird.

7. Zentralschmieranlage für die Schmierung einer Vorrichtung mit mehreren Schmierstellen, bestehend aus
einer zentralen Steuereinheit (5) mit einem Mikrocomputer (20) und einer speicherprogrammierbaren Steuerung (21) und
Schmierstoffgebern (1), die jeweils einen elektromotorischen Antrieb (4) mit zugeordneter Steuereinrichtung (18), einen Schmierstoffbehälter (14) mit Schmierstoffvorrat (3), eine mit dem Antrieb (4) verbundene Spindel (17) sowie einen von der Spindel (17) bewegbaren Kolben (16) aufweisen,
wobei die zentrale Steuereinheit (5) Eingangssignalleitungen (23) für Betriebszustandssignale der Vorrichtung aufweist und über Ausgabevorrichtungen (31) für Ausgangssignale mit den Steuereinrichtungen (18) der Schmierstoffgeber (1) verbunden sind
und wobei die Steuereinrichtung (18) der Schmierstoffgeber einen Microcontroller (35) sowie einen Datenspeicher (36), der seinen Speicherinhalt unabhängig von der Stromversorgung des Microcontrollers (35) behält und dessen Speicherinhalt les- und überschreibbar ist, aufweist, wobei im Zuge eines zwischen dem Microcontroller (35) und dem Datenspeicher (36) eingerichteten Datenaustauschs die verstrichene Spendezeit im Datenspeicher (36) als Betriebswerte abspeicherbar sind.

8. Zentralschmieranlage nach Anspruch 7, **dadurch gekennzeichnet, dass** die Steuereinrichtung (18) der Schmierstoffgeber (1) einen Bewegungssensor (37) zur mittelbaren oder unmittelbaren Erfassung der Anzahl der Spindelumdrehungen aufweist und den elektromotorischen Antrieb (4) aufgrund eines von der zentralen Steuereinheit 5) abgegebenen Steuerimpulses oder in von der Steuereinrichtung (18) vorgegebenen Intervallen startet sowie nach einer vorgegebenen Anzahl der von dem Bewegungssensor (37) detektierten Umdrehungen den elektromotorischen Antrieb (4) stoppt.

9. Zentralschmieranlage nach Anspruch 7 oder 8, **dadurch gekennzeichnet, dass** die Summe der von dem Bewegungssensor (37) detektierten Umdrehungen im Datenspeicher (36) als Betriebswerte abspeicherbar sind.

10. Zentralschmieranlage nach einem der Ansprüche 7 bis 9, **dadurch gekennzeichnet, dass** dem Datenspeicher (36) eine Schalteinrichtung (39) mit einem Reset-Schalter (40) zur Löschung des Speicherinhalts zugeordnet ist.

11. Zentralschmieranlage nach Anspruch 10, **dadurch gekennzeichnet, dass** die elektromotorischen Antriebe (4) mit den zugeordneten Steuereinrichtungen (18) in einem Gehäuseoberteil (15) der Schmierstoffgeber (1) angeordnet sind, welches lösbar mit einem den Schmierstoffvorrat (3), den Kolben (16) und die Spindel (17) enthaltenden Schmierstoffbehälter (14) verbunden ist, dass der Reset-Schalter (40) beim Anschluss eines fabrikneuen, noch den gesamten Schmierstoffvorrat (3) enthaltenden Schmierstoffbehälters (14) mit dem Kolben (16) wechselwirkt und die Löschung des Speicherinhalts auslöst.

12. Zentralschmieranlage nach einem der Ansprüche 7 bis 11, **dadurch gekennzeichnet, dass** die Ausgabevorrichtungen (31) eine Spannungsaufbereitung (32) für die externe Energieversorgung der Schmierstoffgeber (1) und einen Pegelwandler (33) aufweisen.

13. Zentralschmieranlage nach einem der Ansprüche 7 bis 12, **dadurch gekennzeichnet, dass** die zentrale Steuereinheit (5) Eingänge (26) für Sensoren an der zu schmierenden Vorrichtung und Schnittstellen (27, 28, 29) für Download und Peripherie-Geräte, insbesondere Bedien- und Anzeigegeräte, aufweist.

14. Zentralschmieranlage nach einem der Ansprüche 7 bis 13, **dadurch gekennzeichnet, dass** die zentrale Steuereinheit (5) über ein Bussystem (24) mit den Steuereinrichtungen (18) der Schmierstoffgeber (4) verbunden ist.

15. Zentralschmieranlage nach einem der Ansprüche 7 bis 14, **dadurch gekennzeichnet, dass** die Schmierstoffgeber (1) einen Wahlschalter für die Einstellung der Spendeintervalle aufweisen.

16. Zentralschmieranlage nach einem der Ansprüche 7 bis 15, **dadurch gekennzeichnet, dass** die Schmierstoffgeber (1) einen Wahlschalter für die Einstellung der Größe des Schmierstoffbehälters aufweisen.

17. Zentralschmieranlage nach einem der Ansprüche 7 bis 16, **dadurch gekennzeichnet, dass** die Steuereinrichtungen (18) der Schmierstoffgeber (1) eine Vorrichtung zur automatischen Erkennung der Schmierstoffbehältergröße aufweisen.

18. Zentralschmieranlage nach einem der Ansprüche 7 bis 17, **dadurch gekennzeichnet, dass** die Schmierstoffgeber (1) eine Signaleinrichtung (41) zur Anzeige eines erforderlichen Wechsels des Schmierstoffbehälters aufweisen, welche anspricht, wenn die Summe der vom Bewegungssensor (37) abgegebenen Signale einen Vorgabewert erreicht.

19. Zentralschmieranlage nach einem der Ansprüche 7 bis 18, **dadurch gekennzeichnet, dass** die Schmierstoffgeber (1) eine Signaleinrichtung (42) zur Anzeige eines Störsignals aufweisen, die anspricht, wenn die Frequenz der vom Bewegungssensor (37) abgegebenen Signalfolge während des Betriebs des elektromotorischen Antriebs (4) einen vorgegebenen Kontrollwert unterschreitet oder die Stromaufnahme des elektromotorischen Antriebs einen Grenzwert überschreitet.

20. Zentralschmieranlage nach einem der Ansprüche 7 bis 19, **dadurch gekennzeichnet, dass** die Schmierstoffgeber (1) eine die Betriebsbereitschaft signalisierende Funktionsanzeige (43) aufweisen, die den Motorbetrieb und die Pausenintervalle mit unterschiedlichen optischen Signalen anzeigt.

21. Zentralschmieranlage nach einem der Ansprüche 7 bis 20, **dadurch gekennzeichnet, dass** die Schmierstoffgeber (1) und die zentrale Steuereinheit (5) Sende/Empfangseinrichtungen für eine drahtlose Signalübertragung aufweisen.

## Claims

1. A method of lubricating an apparatus having a plurality of lubricating points, wherein
lubricant is fed to the lubricating points by associated lubricant dispensers, which each comprise an electric motor drive with a controller, a lubricant container with a lubricant supply, a spindle attached to the drive and a piston which can be moved by the spindle,
the lubricant delivery of each lubricant dispenser occurs in a chronological sequence of dispensing intervals, and the points of time for dispensing for the delivery of the lubricant, as well as the duration of the dispensing intervals, are controlled,
the controllers of the lubricant dispensers are triggered by a central computer depending on operating state data of the lubricated apparatus, and
the supply voltage to the controllers is switched on and off depending on the operating state of the apparatus to be lubricated, wherein the dispensing time over which the lubricant dispensers are operable is continuously determined by the controllers of the lubricant dispensers and is permanently stored, and wherein the controllers trigger a delivery of lubricant from the lubricant dispensers when the dispensing time reaches a point of time for dispensing which is predetermined by the controller.

2. A method according to claim 1, wherein operating state data of the lubricant dispensers are determined by the controllers and are fed to the central computer.

3. A method according to claim 1 or 2, wherein the number of spindle revolutions is determined directly or indirectly by a movement sensor, and wherein the electric motor drive of the lubricant dispensers is set in operation based on a control pulse emitted by the central computer or at intervals which are predetermined by the controller, and is stopped after a predetermined number of revolutions is detected by the movement sensor.

4. A method according to claim 3, wherein the sum of all the spindle revolutions is permanently stored in a memory of the controller, and a signal which indicates an empty state is fed to the central computer when a predetermined number of spindle revolutions is reached.

5. A method according to claim 1 or 2, wherein the points in time for dispensing for the delivery of lubricant, as well as the duration of the dispensing intervals, are controlled by the central computer.

6. A method according to any one of claims 1 to 5, wherein wireless signal transmission is employed between the central computer and the lubricant dispensers.

7. A central lubricating installation for the lubrication of an apparatus having a plurality of lubricating points, consisting of
a central controller (5) comprising a microcomputer (20) and a stored program control system (21), and
lubricant dispensers (1) which each comprise an electric motor drive (4) with an associated controller (18), a lubricant container (14) with a lubricant supply (3), a spindle (17) attached to the drive (4), and a piston (16) which can be moved by the spindle (17),
wherein the central controller (5) comprises input signal lines (23) for operating state signals from the apparatus, and is connected, via output apparatuses (31) for output signals, to the controllers (18) of the lubricant dispensers (1),
and wherein the controller (18) of the lubricant dispensers comprises a microcontroller (35), as well as a memory (36) which retains its memory content irrespective of the power supply to the microcontroller (35) and the memory content of which can be read and overwritten, wherein in the course of an exchange of data which is arranged between the microcontroller (35) and the memory (36) the dispensing time which has elapsed can be stored as operating values in the memory (36).

8. A central lubricating installation according to claim 7, **characterised in that** the controller (18) of the lubricant dispensers (1) comprises a movement sensor (37) for the direct or indirect determination of the number of spindle revolutions, and starts the electric motor drive (4) based on a control pulse emitted by the central controller (5) or at intervals predetermined by the controller (18), and stops the electric motor drive (4) after a predetermined number of revolutions of the electric motor drive (4) is detected by the movement sensor (37).

9. A central lubricating installation according to claim 7 or 8, **characterised in that** the sum of the revolutions detected by the movement sensor (37) can be stored as operating values in the memory (36).

10. A central lubricating installation according to any one of claims 7 to 9, **characterised in that** a switching device (39) comprising a reset switch (40) for deleting the contents of the memory is associated with the memory (36).

11. A central lubricating installation according to claim 10, **characterised in that** the electric motor drive (4) is disposed, with the associated controllers (18), in a housing upper part (15) of the lubricant dispensers (1), which is detachably joined to a lubricant container (14) which contains the lubricant supply (3), the piston (16) and the spindle (17), and that on the attachment of a brand new lubricant container (14) which still contains its entire lubricant supply (3) the reset switch (40) interacts with the piston (16) and triggers the deletion of the contents of the memory.

12. A central lubricating installation according to any one of claims 7 to 11, **characterised in that** the output apparatuses (31) comprise a voltage processing device (32) for the external power supply to the lubricant dispensers (1), and a level converter (33).

13. A central lubricating installation according to any one of claims 7 to 12, **characterised in that** the central controller (5) comprises inputs (26) for sensors on the apparatus to be lubricated, and interfaces (27, 28, 29) for download and peripheral devices, particularly operating and display devices.

14. A central lubricating installation according to any one of claims 7 to 13, **characterised in that** the central controller (5) is connected via a bus system (24) to the controllers (18) of the lubricant dispensers (4).

15. A central lubricating installation according to any one of claims 7 to 14, **characterised in that** the lubricant dispensers (1) comprise a selector switch for setting the dispensing intervals.

16. A central lubricating installation according to any one of claims 7 to 15, **characterised in that** the lubricant dispensers (1) comprise a selector switch for setting the size of the lubricant container.

17. A central lubricating installation according to any one of claims 7 to 16, **characterised in that** the controllers (18) of the lubricant dispensers (1) comprise an apparatus for the automatic recognition of the lubricant container size.

18. A central lubricating installation according to any one of claims 7 to 17, **characterised in that** the lubricant dispensers (1) comprise a signal device (41) for indicating the necessary replacement of the lubricant container, which device responds when the sum of the signals emitted by the movement sensor (37) reaches a predetermined value.

19. A central lubricating installation according to any one of claims 7 to 18, **characterised in that** the lubricant dispensers (1) comprise a signal device (42) for displaying a trouble signal, which device responds when the frequency of the signal sequence emitted by the movement sensor (37) during the operation of the electric motor drive (4) falls below a predetermined control value, or when the current consumption of the electric motor drive exceeds a limiting value.

20. A central lubricating installation according to any one of claims 7 to 19, **characterised in that** the lubricant dispensers (1) comprise an operating display (43) which signals readiness for operation and which displays motor operation and pause intervals by different optical signals.

21. A central lubricating installation according to any one of claims 7 to 20, **characterised in that** the lubricant dispensers (1) and the central controller (5) comprise transmission/reception devices for wireless signal transmission.

## Revendications

1. Procédé de lubrification d'un dispositif avec plusieurs emplacements de lubrification, dans lequel
un lubrifiant est envoyé aux emplacements de lubrification par des distributeurs correspondants de lubrifiant qui comportent chacun un dispositif d'entraînement électromotorisé avec dispositif de commande, un réservoir de lubrifiant avec réserve de lubrifiant, une broche reliée au dispositif d'entraînement, ainsi qu'un piston déplaçable au moyen de la broche,
la distribution de lubrifiant par chaque distributeur de lubrifiant s'effectue en une succession dans le temps d'intervalles de distribution, et les instants de distribution pour la distribution de lubrifiant ainsi que la durée des intervalles de distribution sont commandés,
les dispositifs de commande des distributeurs de lubrifiant sont commandés par un ordinateur central en fonction de données d'état de fonctionnement du dispositif lubrifié, et
la tension d'alimentation des dispositifs de commande est fournie et coupée en fonction de l'état de fonctionnement du dispositif à lubrifier, le temps de distribution, pendant lequel les distributeurs de lubrifiant sont prêts à fonctionner, est détecté en continu par les dispositifs de commande et distributeurs de lubrifiant et mémorisé en permanence, et les dispositifs de commande déclenchant une distribution du lubrifiant par les distributeurs de lubrifiant lorsque le temps de distribution atteint un instant de distribution prescrit par le dispositif de commande.

2. Procédé selon la revendication 1 dans lequel des données d'état de fonctionnement des distributeurs de lubrifiant sont détectées par les dispositifs de commande et envoyées à l'ordinateur central.

3. Procédé selon la revendication 1 ou 2, dans lequel le nombre de rotations de la broche est détecté directement ou indirectement par un capteur de mouvement et dans lequel le dispositif d'entraînement électromotorisé des distributeurs de lubrifiant est mis en marche sur la base d'une impulsion de commande délivrée par l'ordinateur central, ou à intervalles prescrits par le dispositif de commande, et est stoppé après un nombre prédéterminé de rotations détectées par le capteur de mouvement.

4. Procédé selon la revendication 3, dans lequel la somme de toutes les rotations de la broche est mémorisée en permanence dans une mémoire de données du dispositif de commande, et un signal d'indication d'état vide est envoyé à l'ordinateur central lorsqu'un nombre prédéterminé de rotations de la broche est atteint.

5. Procédé selon la revendication 1 ou 2, dans lequel les instants de distribution du lubrifiant ainsi que la durée des intervalles de distribution sont commandés par l'ordinateur central.

6. Procédé selon l'une des revendications 1 à 5, dans lequel on travaille avec une transmission sans fil des signaux entre l'ordinateur central et les distributeurs de lubrifiant.

7. Système central de lubrification pour la lubrification d'un dispositif avec plusieurs emplacements de lubrification, constitué
d'une unité centrale de commande (5) avec un micro-ordinateur (20) et une commande (21) à mémoire programmable, et
de distributeurs de lubrifiant (1) qui comportent chacun un dispositif d'entraînement électromotorisé (4) avec dispositif de commande (18) associé, un réservoir de lubrifiant (14) avec réservoir de lubrifiant (3), une broche (17) reliée au dispositif d'entraînement (4) ainsi qu'un piston (16) déplaçable au moyen de la broche (17),
dans lequel l'unité centrale de commande (5) comporte des lignes de signaux d'entrée pour des signaux d'état de fonctionnement du dispositif et est reliée, par des dispositifs de sortie (31) pour des signaux de sortie, aux dispositifs de commande (18) des distributeurs de lubrifiant (1),
et dans lequel le dispositif de commande (18) des distributeurs de lubrifiant comporte un micro-contrôleur (35) ainsi qu'une mémoire de données (36) qui conserve son contenu de mémoire indépendamment de l'alimentation en courant du micro-contrôleur (35) et dont le contenu de mémoire peut être lu et écrasé, le temps de distribution écoulé pouvant être mémorisé dans la mémoire de données (36) comme valeur de fonctionnement, au cours d'un échange de données installé entre le micro-contrôleur (35) et la mémoire de données (36).

8. Système central de lubrification selon la revendication 7, **caractérisé en ce que** le dispositif de commande (18) des distributeurs de lubrifiant (1) comporte un capteur de mouvement (37) pour la détection directe ou indirecte du nombre de rotations de la broche, et met en marche le dispositif d'entraînement électromotorisé (4) sur la base d'une impulsion de commande délivrée par l'unité centrale de commande (5), ou à intervalles prescrits par le dispositif de commande (18), et stoppe le dispositif d'entraînement électromotorisé (4) après un nombre prédéterminé de rotations détectées par le capteur de mouvement (37).

9. Système central de lubrification selon la revendication 7 ou 8, **caractérisé en ce que** la somme des rotations détectées par le capteur de mouvement (37) peut être mémorisée dans la mémoire de données (36) comme valeurs de fonctionnement.

10. Système central de lubrification selon l'une des revendications 7 à 9, **caractérisé en ce qu'**à la mémoire de données (36) est associé un dispositif de commutation (39) avec un interrupteur de remise à zéro (40) pour effacer le contenu de la mémoire.

11. Système central de lubrification selon la revendication 10, **caractérisé en ce que** les dispositifs d'entraînement électromotorisés (4) sont disposés avec les dispositifs de commande (18) associés dans une partie supérieure (15) du boîtier des distributeurs de lubrifiant (1), laquelle est reliée de manière séparable à un réservoir de lubrifiant (14) contenant la réserve de lubrifiant (3), le piston (16) et la broche (17), **en ce qu'**au moment où l'on raccorde un réservoir de lubrifiant (9) d'usine, contenant encore toute la réserve de lubrifiant (3), l'interrupteur de remise à zéro (40) interagit avec le piston (16) et déclenche l'effacement du contenu de la mémoire.

12. Système central de lubrification selon l'une des revendications 7 à 11, **caractérisé en ce que** le dispositif de sortie (31) comporte un traitement de la tension (32) pour l'alimentation externe en énergie des distributeurs de lubrifiant (1), ainsi qu'un convertisseur de niveau (33).

13. Système central de lubrification selon l'une des revendications 7 à 12, **caractérisé en ce que** l'unité centrale de commande (5) comporte des entrées (26) pour des capteurs, sur le dispositif à lubrifier et des interfaces (27, 28, 29) pour le chargement ainsi que des périphériques, en particulier des appareils de commande et d'affichage.

14. Système central de lubrification selon l'une des revendications 7 à 13, **caractérisé en ce que** l'unité centrale de commande (5) est reliée par un système de bus (24) aux dispositifs de commande (18) des distributeurs de lubrifiant (4).

15. Système central de lubrification selon l'une des revendications 7 à 14, **caractérisé en ce que** les distributeurs de lubrifiant (1) comportent un sélecteur pour le réglage des intervalles de distribution.

16. Système central de lubrification selon l'une des revendications 7 à 15, **caractérisé en ce que** les distributeurs de lubrifiant (1) comportent un sélecteur pour le réglage de la taille du réservoir de lubrifiant.

17. Système central de lubrification selon l'une des revendications 7 à 16, **caractérisé en ce que** les dispositifs de commande (18) des distributeurs de lubrifiant (1) comportent un dispositif pour la reconnaissance automatique de la taille du réservoir de lubrifiant.

18. Système central de lubrification selon l'une des revendications 7 à 17, **caractérisé en ce que** les distributeurs de lubrifiant (1) comportent un dispositif de signalisation (41) pour indiquer qu'il est nécessaire de changer le réservoir de lubrifiant, qui intervient lorsque la somme des signaux délivrés par le capteur de mouvement (37) atteint une valeur sélectionnée.

19. Système central de lubrification selon l'une des revendications 7 à 18, **caractérisé en ce que** les distributeurs de lubrifiant (1) comportent un dispositif de signalisation (42) pour indiquer un signal de dérangement, qui intervient lorsque la fréquence de la succession de signaux délivrés par le capteur de mouvement (37), pendant le fonctionnement du dispositif d'entraînement électromotorisé (4), passe au-dessous d'une valeur de contrôle prédéfinie, ou lorsque la consommation de courant du dispositif d'entraînement électromotorisé dépasse une valeur limite.

20. Système central de lubrification selon l'une des revendications 7 à 19, **caractérisé en ce que** les distributeurs de lubrifiant (1) comportent un affichage de fonctionnement (43) qui signale l'état de veille et qui indique le fonctionnement du moteur et les intervalles de pause par des signaux optiques différents.

21. Système central de lubrification selon l'une des revendications 7 à 20, **caractérisé en ce que** les distributeurs de lubrifiant (1) et l'unité centrale de commande (5) comportent des dispositifs d'émission/réception pour une transmission sans fil des signaux.
